Europäisches Patentamt

(19) European Patent Office

Office européen des brevets

(11) **EP 1 157 261 B1**

(12) **FASCICULE DE BREVET EUROPEEN**

(45) Date de publication et mention
de la délivrance du brevet:
**23.07.2003 Bulletin 2003/30**

(21) Numéro de dépôt: **00900571.1**

(22) Date de dépôt: **14.01.2000**

(51) Int Cl.7: **G01J 9/00**

(86) Numéro de dépôt international:
**PCT/FR00/00063**

(87) Numéro de publication internationale:
**WO 00/042401 (20.07.2000 Gazette 2000/29)**

(54) **PROCEDE ET DISPOSITIF D'ANALYSE D'UN FRONT D'ONDE A GRANDE DYNAMIQUE**

VERFAHREN UND VORRICHTUNG ZUR ANALYSE EINER HOCHDYNAMISCHEN
WELLENFRONT

METHOD AND DEVICE FOR ANALYSING A HIGHLY DYNAMIC WAVEFRONT

(84) Etats contractants désignés:
**AT BE CH CY DE DK ES FI FR GB GR IE IT LI LU
MC NL PT SE**

(30) Priorité: **15.01.1999 FR 9900366**

(43) Date de publication de la demande:
**28.11.2001 Bulletin 2001/48**

(73) Titulaire: **Imagine Optic
91400 Orsay (FR)**

(72) Inventeurs:
• **LEVECQ, Xavier, Jean-François
F-91190 Gif sur Yvette (FR)**
• **BUCOURT, Samuel, Henri
F-91440 Bures sur Yvette (FR)**

(74) Mandataire: **Pontet, Bernard et al
Pontet Allano & Associés s.e.l.a.r.l.
25 rue Jean-Rostand
Parc Club Orsay Université
91893 Orsay Cédex (FR)**

(56) Documents cités:
**DE-A- 19 705 119**

• **M.C. ROGGEMANN AND T.J. SCHULZ:
"Algorithm to increase the largest aberration
that can be reconstructed from Hartmann sensor
measurements" APPLIED OPTICS, vol. 37, no.
20, 10 juillet 1998 (1998-07-10), pages 4321-4329,
XP002112722**

## Description

La présente invention concerne un procédé et un dispositif d'analyse d'un front d'onde optique. Elle constitue une amélioration des procédés d'analyse de front d'onde basés sur la mesure locale de la pente du front d'onde.

L'analyse d'un front d'onde par mesure locale de la pente (correspondant à la dérivée locale de la phase du front d'onde) est par exemple le principe des analyseurs de front d'onde dits 'Shack-Hartmann matriciels' voir, par exemple, la demande de brevet DE 197 05 119 ou l'article "Algorithm to increase the largest aberration that can be reconstructed from Hortmann sensor measurements" de M.C. Roggemann et al. paru dans APPLIED OPTICS, vol. 37, no. 20. Ils comportent généralement une matrice de microlentilles sphériques et un détecteur matriciel, chaque microlentille focalisant la surface élémentaire du front d'onde interceptée par la sous-pupille correspondant à la microlentille, formant ainsi une tache lumineuse sur le détecteur. La pente locale de la surface élémentaire est déterminée à partir de la position de la tache sur le détecteur. L'analyse de la surface du front d'onde proprement dite, c'est-à-dire la reconstruction de la phase du front d'onde par exemple sur une base de polynômes, peut être obtenue par intégration des mesures locales de la pente. D'autres types d'analyseurs travaillent sur une ligne du front d'onde. Dans ce cas on utilise par exemple des microlentilles cylindriques disposées linéairement et un détecteur à géométrie linéaire. De la même façon que dans le Shack-Hartmann matriciel, les pentes locales de la ligne d'onde sont mesurées à partir des positions des taches formées par les microlentilles.

De façon générale, le procédé selon l'invention s'applique à tout type d'analyseurs de front d'onde basés sur la mesure de la pente locale du front d'onde. Dans la suite, on nommera 'matrice de microlentilles' tout ensemble de microlentilles pouvant être utilisé dans ce type d'analyseur, les microlentilles pouvant être agencées linéairement ou selon une matrice à deux dimensions. De la même façon, on parlera de l'analyse d'un « front d'onde », cette analyse pouvant concerner indifféremment une partie de la surface du front d'onde, en particulier une ligne du front d'onde ou la surface totale du front d'onde.

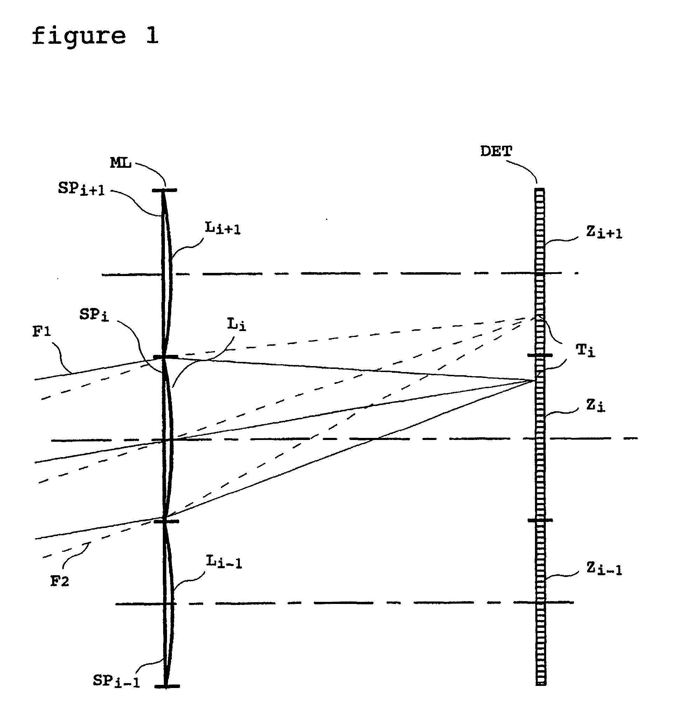

La figure 1 montre un ensemble ML de microlentilles $L_i$ et un détecteur DET pour la mise en oeuvre d'un procédé d'analyse de front d'onde tel que décrit précédemment. Lorsqu'un front d'onde $F_1$ pénètre dans le système, chaque microlentille forme une tache $T_i$ sur le détecteur. Pour déterminer la position des taches, on fait généralement l'hypothèse qu'une tache $T_i$ formée par une microlentille $L_i$ donnée, se trouve dans une zone de localisation présumée $Z_i$. Cette zone de localisation est par exemple définie par la projection sur le détecteur DET de la sous-pupille $SP_i$ correspondant à la microlentille $L_i$, comme cela est illustrée sur la figure 1. Cette hypothèse présente l'intérêt de simplifier considérablement le circuit de localisation des taches et donc de rendre le système plus rapide. Parfois, la structure de la matrice de microlentille n'est pas parfaite et peut présenter des défauts locaux, par exemple des défauts d'agencement des microlentilles ou de taille d'une microlentille par rapport à une autre. Cela introduit une erreur sur la position de la tache formée. Pour pallier ce type de problème, on soustrait généralement aux positions des taches formées à partir du front d'onde à analyser, les positions des taches formées à partir d'un faisceau de référence parfaitement connu. Bien sûr, pour ne pas introduire d'erreur lors de cette opération, il est nécessaire que soit soustraite l'une avec l'autre les positions de deux taches formées par la même microlentille. Si l'on suppose a priori qu'une tache détectée dans une zone de localisation donnée est issue de la sous-pupille qui définit cette zone, on risque d'introduire une erreur lors de l'opération de soustraction lorsqu'un front d'onde présente par exemple un basculement important. En effet, comme cela apparaît par exemple sur la figure 1, si un front d'onde $F_2$ présente un basculement important, la tache $T_i$ formée par la lentille $L_i$ se trouve dans la zone de localisation présumée $Z_{i+1}$ correspondant à la lentille $L_{i+1}$. Il existe un décalage d'une sous-pupille (dans l'exemple choisi) entre la sous-pupille $SP_i$ dont est issue la tache $T_i$ et la sous-pupille $SP_{i+1}$ qui définit la zone de localisation $Z_{i+1}$ dans laquelle se trouve effectivement la tache $T_i$.

Bien sûr, on cherche toujours à obtenir des matrices de microlentilles parfaites et les progrès de la technologie vont dans ce sens. Mais le problème consistant à connaître de façon certaine la correspondance entre une tache détectée et la sous-pupille dont elle est issue se pose toujours, par exemple lorsqu'on cherche une mesure exacte du basculement à l'aide d'un dispositif dont on souhaite qu'il ait une grande dynamique, c'est-à-dire un dispositif capable d'analyser des fronts d'onde présentant entre autre de forts basculements. Dans ce cas, il est nécessaire pour connaître de façon certaine cette correspondance de pouvoir mesurer le décalage entre la sous-pupille dont est issue la tache et la sous-pupille qui définit la zone de localisation présumée dans laquelle se trouve la tache.

Une solution est proposée dans ce sens par la société Adaptive Optics Associates (AOA, Cambridge, MA). Cette solution, appliquée à un analyseur de front d'onde de type Shack-Hartmann matriciel, est expliquée dans l'article 'Hartmann sensors detect optical fabrication errors' (LASER FOCUS WORLD, Avril 1996). Elle consiste, au cours de la mesure, à rapprocher le détecteur de la matrice de microlentilles de telle sorte que, quelle que soit la pente locale du front d'onde que l'on analyse, tout le flux collecté par une sous-pupille se trouve intégralement sur la zone de localisation présumée définie par cette sous-pupille. Puis, on éloigne le détecteur de la matrice de microlentilles jusqu'à sa position normale de travail en suivant la position de la tache. On peut ainsi repérer si elle change de zone. Cette solution présente des inconvénients. En particulier, elle nécessite le déplacement du détecteur, ce qui entraîne des contraintes mécaniques dans le système et le risque que soit introduite une erreur sur la mesure, du fait d'un éventuel basculement du détecteur, ou d'un mauvais repositionnement axial lors du déplacement. D'autre part, cette opération de calibration doit être répétée pour chaque analyse d'un nouveau front d'onde. Et même au cours de l'analyse d'un front d'onde, comme la correspondance entre une tache et la microlentille dont elle est issue est déterminée en suivant la position de cette tache, si cette position est perdue (par exemple parce que le flux est momentanément coupé), la correspondance n'est plus certaine et la calibration est à refaire.

Pour pallier ces inconvénients, la présente invention propose une autre solution permettant une mesure exacte des paramètres du front d'onde et notamment de son basculement. Elle consiste à choisir une matrice de microlentilles présentant une ou plusieurs variations locales de sa structure. Selon un exemple de mise en oeuvre, chaque variation locale peut être un écart de positionnement d'une ou de quelques microlentilles. Cette variation peut être un défaut non voulu de la matrice ou une variation locale introduite de façon contrôlée lors de la fabrication. En comparant les positions des taches formées à partir d'un front d'onde à analyser avec les positions des taches formées par exemple à partir d'un front d'onde de référence connu, on peut, grâce à la présence de la variation locale de la structure qui par exemple introduit des variations dans les positions de certaines taches, mesurer le décalage éventuel entre la sous-pupille dont est issue une tache détectée et la sous-pupille qui définit la zone de localisation présumée dans laquelle se trouve la tache.

Plus précisément, l'invention concerne un procédé d'analyse d'un front d'onde basé sur la mesure locale de la pente du front d'onde, le procédé comprenant une étape d'acquisition du front d'onde consistant en:

- une étape de détection du front d'onde au moyen notamment d'une matrice de microlentilles, d'un détecteur et de moyens de traitement du signal; chaque microlentille définit une sous-pupille indexée, et focalise une surface élémentaire du front d'onde, interceptée par ladite sous-pupille; une tache est formée sur le détecteur qui délivre un signal; une zone de localisation présumée de la tache sur le détecteur est définie pour chaque sous-pupille.
- une étape de traitement du signal délivré par le détecteur qui permet d'établir un fichier de mesure; ce fichier associe notamment à chaque sous-pupille dans la zone de localisation de laquelle est détectée une tache, la position de cette tache, chaque sous-pupille étant repérée par son index.

Le procédé est caractérisé en ce qu'il comporte en outre:

- le choix préalable d'une matrice de microlentilles présentant au moins une variation locale de sa structure,
- une étape préalable de caractérisation de cette matrice permettant d'établir un fichier de référence associant notamment à chaque sous-pupille, repérée par son index, la position de la tache issue de ladite sous-pupille lorsque la sous-pupille est éclairée par un front d'onde connu, les données du fichier comportant une contribution due à la variation locale de la structure de la matrice,
- lors de chaque analyse d'un front d'onde,

  - l'établissement du fichier de mesure, les données du fichier comportant également une contribution due à la variation locale de la structure de la matrice,
  - la comparaison desdites contributions prises dans chacun des deux fichiers, cette comparaison permettant de déterminer un décalage éventuel en nombre de sous-pupilles entre ces deux contributions et d'en déduire de manière certaine la correspondance entre une tache détectée et la sous-pupille dont elle est issue,
  - le calcul, connaissant cette correspondance, à partir du fichier de mesure et du fichier de référence, de la pente moyenne du front d'onde sur chaque surface élémentaire interceptée par chaque sous-pupille éclairée par le front d'onde.

Le procédé selon l'invention permet ainsi, sans déplacement du détecteur de déterminer la correspondance entre une tache détectée et la sous-pupille dont elle est issue sans devoir procéder à une nouvelle opération de calibration pour chaque analyse d'un front d'onde. Cela permet en particulier la mesure exacte du basculement d'un front d'onde incident et donne ainsi à l'analyseur une très grande dynamique de mesure. L'invention concerne également un dispositif d'analyse d'un front d'onde mettant en oeuvre le procédé selon l'invention et défini dans la revendication. D'autres avantages et caractéristiques de l'invention apparaîtront plus clairement à la lecture de la description qui suit, illustrée par les figures annexées suivantes, qui représentent:

- la figure 1 (déjà décrite) une matrice de microlentilles et un détecteur pour la mise en oeuvre d'un exemple de procédé d'analyse de front d'onde selon l'art antérieur;
- les figures 2A à 2D, un exemple de mise en oeuvre du procédé selon l'invention;
- la figure 3, un synoptique d'un exemple de mise en oeuvre du procédé selon l'invention;

Le dispositif selon l'invention comporte notamment une matrice ML de microlentilles $L_i$ (voir figure 1), un détecteur DET et des moyens (non représentés) de traitement du signal délivré par le détecteur. Chaque microlentille $L_i$ définit une sous-pupille $SP_i$, indexée, par exemple par un nombre entier variant de 1 à n, où n est le nombre de microlentilles de la matrice. Lors de l'analyse d'un front d'onde, chaque microlentille $L_i$ éclairée par le front d'onde focalise une surface élémentaire du front d'onde, interceptée par la sous-pupille $SP_i$ définie par cette microlentille, pour former sur le détecteur une tache $T_i$. Les moyens de traitement permettent de traiter le signal délivré par le détecteur afin notamment d'établir un fichier de mesure associant à chaque sous-pupille dans la zone de localisation de laquelle est détectée une tache, la position de cette tache. La position de chaque tache sur le détecteur est déterminée par exemple en considérant le barycentre de la répartition spatiale d'énergie lumineuse constituant la tache. Nous avons vu précédemment que la zone de localisation présumée (notée $Z_i$ sur la figure 1), correspondant à une sous-pupille $SP_i$, peut être définie par la projection sur le détecteur DET de la sous-pupille $SP_i$. Dans ce cas, elle est indépendante du front d'onde incident. La zone de localisation peut être définie différemment. Par exemple, elle peut être 'flottante'; c'est-à-dire que l'on définit la zone de localisation présumée d'une sous-pupille à partir de la position de la tache issue d'une sous-pupille adjacente. Dans ce cas, chaque zone de localisation a par exemple la même dimension mais la position de la zone de localisation de chaque sous-pupille dépend de la forme du front d'onde incident. Selon un exemple de réalisation du dispositif selon l'invention, on suppose que ces microlentilles sont de dimensions sensiblement égales et que le pas de la matrice, défini par la distance entre les centres optiques de deux microlentilles adjacentes, est sensiblement constant.

Dans le procédé selon l'invention, la matrice ML de microlentilles présente au moins une variation locale de sa structure. La structure de la matrice concerne l'agencement des microlentilles les unes par rapport aux autres ainsi que les paramètres propres aux microlentilles: taille, transmission, etc..... Par variation locale de la structure, on entend aussi par exemple une variation de positionnement, de taille ou de transmission de l'une des microlentilles ou de quelques microlentilles adjacentes. Cette variation peut par exemple être un défaut non voulu de la matrice de la microlentilles, défaut dû à la non-reproductibilité du procédé de fabrication de la matrice. Il peut aussi s'agir d'une variation parfaitement contrôlée, que l'on introduit volontairement lors de la fabrication. Dans la suite, nous considérons l'exemple d'une matrice de microlentilles à pas sensiblement constant, la variation locale consistant en un écart de positionnement de quelques microlentilles adjacentes par rapport à la position attendue de ces microlentilles.

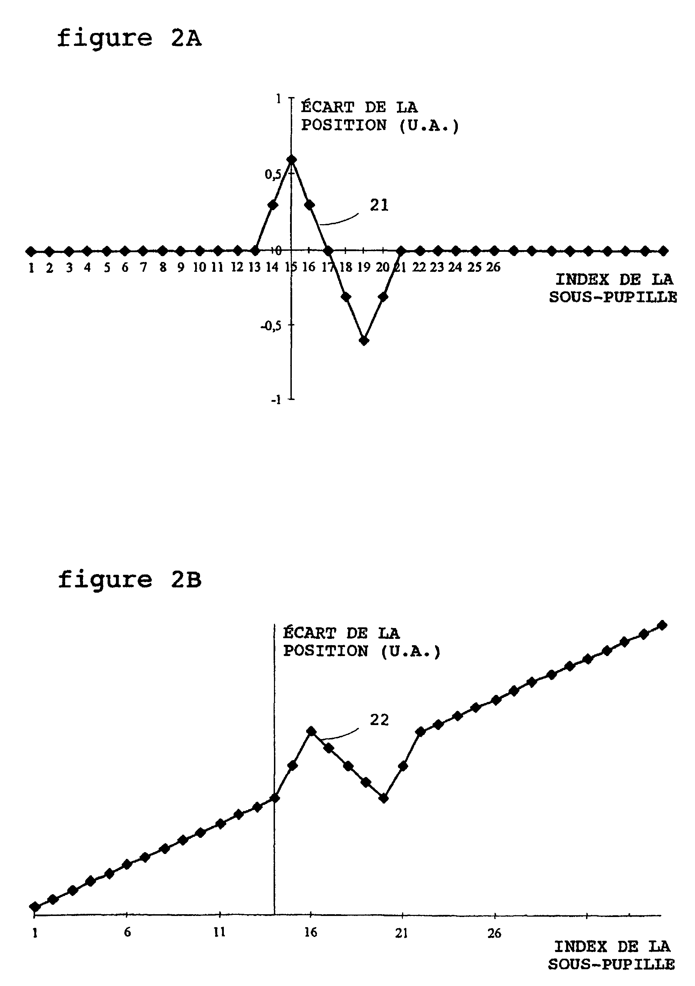

Dans cet exemple, une variation de la structure se traduit, lors de l'analyse d'un front d'onde, par des écarts sur le détecteur des positions des taches issues des sous-pupilles impliquées dans cette variation. Dans l'exemple de mise en oeuvre choisie, on considère une variation locale de la structure de la matrice introduite de façon contrôlée lors de la fabrication. La figure 2A représente, lorsque la matrice de microlentilles est éclairée par un front d'onde plan, un exemple d'une distribution des écarts des positions des taches par rapport à leurs positions attendues si le pas de la matrice avait été parfaitement constant, en fonction de l'index (variant de 1 à n) des sous-pupilles dont sont issues les taches. L'écart de position, donné sur la figure 2A en unités arbitraires (u.a.), est mesuré par exemple par une fraction de dimension d'un détecteur élémentaire. De façon générale, la variation locale de la matrice utilisée dans le dispositif selon l'invention, qui se traduit ici par une distribution donnée des écarts des positions des taches, ne doit pas pouvoir être interprétée lors de l'analyse d'un front d'onde comme une composante de ce front d'onde. Autrement dit, la distribution des écarts des positions des taches résultant de l'acquisition du front d'onde à analyser doit pouvoir être distinguée de la distribution résultant de la variation locale. Ceci est possible car pour pouvoir être analysé correctement, un front d'onde incident doit présenter des variations lentes de sa pente par rapport à la taille des sous-pupilles, ce qui se traduit par des fluctuations lentes de la distribution des écarts des positions des taches en fonction de l'index des sous-pupilles. Ainsi, dans l'exemple de réalisation du dispositif selon l'invention décrit ici, la variation de la structure de la matrice doit être telle qu'elle se traduise dans la distribution des écarts des positions des taches par des fluctuations plus rapides ou, si l'on raisonne dans le domaine fréquentiel en considérant la répartition spectrale des écarts, elle doit se traduire par des composantes de fréquences supérieures à celles dues au front d'onde à analyser. La forme de la distribution représentée sur la figure 2A constitue un exemple, et du moment que la variation reste locale, d'autres formes de distributions sont acceptables.

Dans l'exemple illustré figure 2A, on considère une seule variation locale de la structure. Avantageusement, la matrice peut en présenter plusieurs de sorte que même si elle n'est pas entièrement éclairée par le front d'onde incident, au moins une de ces variations locales soit éclairée. Dans ce cas, l'ensemble des variations doit être tel qu'il se traduise également, dans la répartition spectrale des écarts, par des fréquences supérieures à celle du front d'onde à analyser.

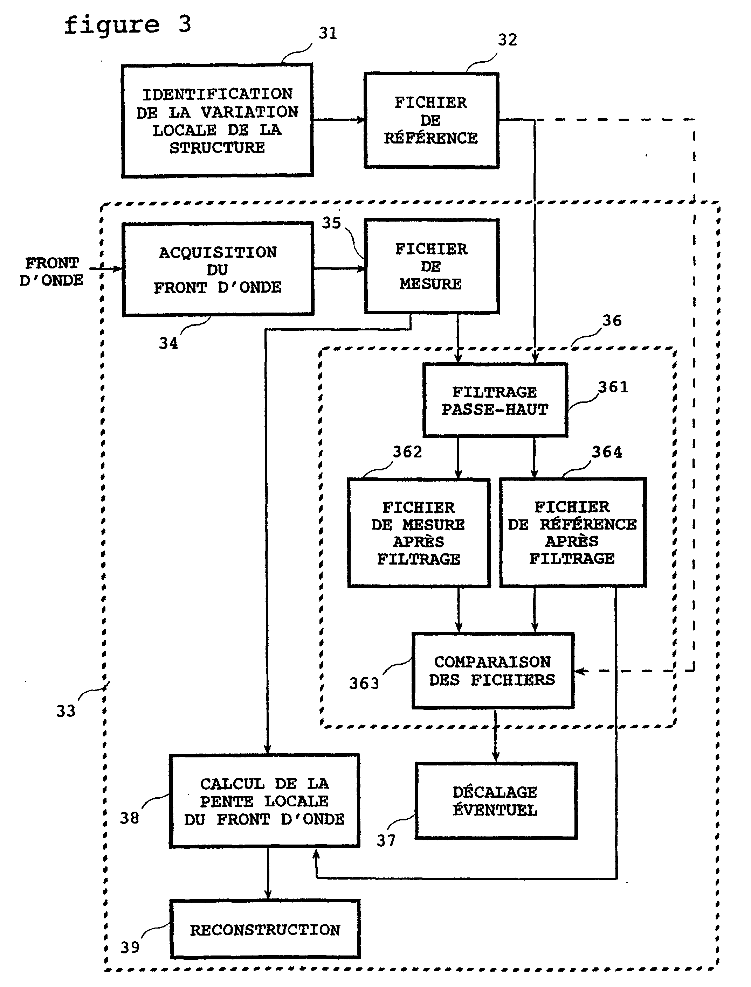

La figure 3 présente un synoptique d'un exemple de mise en oeuvre du procédé selon l'invention adapté à l'exemple précédemment décrit. Selon l'invention, le procédé comporte outre le choix préalable 30 de la matrice ML présentant au moins une variation locale de sa structure, une étape 31 de caractérisation de cette matrice ML. Cette étape permet d'établir un fichier de référence (32) qui dans l'exemple choisi associe à chaque sous-pupille, repérée par son index, la position de la tache issue de ladite sous-pupille lorsque celle-ci est éclairée par un front d'onde connu. Les données du fichier de référence comportent une contribution due à la variation locale de la structure de la matrice. Ainsi, on pourra connaître, lors de l'analyse d'un front d'onde, la contribution de cette variation locale dans les positions des taches sur le détecteur. Cette étape de caractérisation de la matrice de microlentilles est faite une fois avant ou lors de la mise en place de la matrice dans l'analyseur et elle n'a pas besoin d'être refaite dans le cours normale d'utilisation de l'analyseur. Il suffit de garder en mémoire le fichier de référence; c'est lui qui sera utilisé lors de chaque analyse d'un front d'onde. Plusieurs méthodes sont possibles pour caractériser la matrice. Si le procédé de fabrication est parfaitement contrôlé, de telle sorte que l'on connaisse exactement la structure de la matrice et que l'on maîtrise les variations locales introduites dans cette structure, le fichier de référence peut être établi de façon théorique, en calculant la position de la tache issue de chaque sous-pupille lorsque la matrice est éclairée par exemple par un front d'onde plan et sans basculement. Comme dans l'exemple de la figure 2A, la position des taches peut être exprimée en écart de position lorsque par exemple le pas de la matrice de microlentilles est constant. Dans l'exemple de la figure 2A, l'écart de la position de chaque sous-pupille en fonction de l'index de ladite sous-pupille est déterminée dans le cas où la matrice est éclairée par un front d'onde plan, sans basculement. Si le procédé de fabrication n'est pas parfaitement maîtrisée, il faut analyser la structure de la matrice une fois réalisée. Cela peut être fait avec tout moyen de caractérisation connu. Avantageusement, il est possible d'établir le fichier de référence en envoyant sur l'analyseur dans lequel se trouve la matrice un front d'onde connu. Cela présente l'intérêt de caractériser la matrice une fois disposée dans l'analyseur. Ce front d'onde est par exemple une onde sphérique dont les caractéristiques sont bien maîtrisées. Ainsi, que la variation locale soit un défaut non contrôlé de la structure ou une variation introduite lors de la fabrication, le fichier de référence permet de l'identifier. Le fichier de référence contient aussi la contribution d'éventuelles variations lentes de la structure de la matrice dont il faudra tenir compte lors de l'analyse d'un front d'onde.

Vient ensuite l'analyse 33 d'un front d'onde incident sur l'analyseur. L'exemple choisi pour illustrer le procédé selon l'invention est celui d'un front d'onde présentant de la courbure et du basculement. La première étape de l'analyse est l'acquisition 34 du front d'onde. Elle consiste en une détection du front d'onde au moyen notamment de la matrice ML du dispositif selon l'invention, puis une étape de traitement du signal délivré par le détecteur, effectuée par les moyens de traitement du dispositif selon l'invention, et permettant d'établir le fichier de mesure noté 35. Le fichier de mesure associe à chaque sous-pupille dans la zone de localisation présumée de laquelle est détectée une tache, la position de cette tache. Le fichier de mesure contient ainsi, pour chacune de ces sous-pupilles, repérée par son index, la position de la tache correspondante. La figure 2B illustre sous forme d'une courbe 22 le contenu du fichier de mesure dans le cas de l'exemple du front d'onde choisi, analysée grâce à la matrice de microlentilles caractérisée par le fichier de référence illustré par la courbe 21 de la figure 2A. La courbure du front d'onde se traduit par une répartition linéaire de l'écart de la position des taches en fonction de l'index de la sous-pupille. Le basculement se traduit par un écart constant sur l'ensemble de la matrice de la position de chaque tache. Pour simplifier le schéma, on fait l'hypothèse que le basculement entraîne un écart constant de deux sous-pupilles. Ainsi, la courbe 22 fait apparaître la contribution due au front d'onde (courbure et basculement) à laquelle s'ajoute la contribution due à la variation locale de la structure (variations des écarts similaires à celles de la courbe 21). On comprend bien par cet exemple simple que sans la variation locale, la courbe 22 serait une droite, caractéristique de la courbure du front d'onde, mais qu'il ne serait pas possible de déterminer la valeur exacte du basculement, qui, dans cet exemple, serait considéré comme nul. Par conséquent, il y aurait une erreur de correspondance entre une tache détectée et la sous-pupille dont elle est issue; cette erreur pouvant fausser le calcul de la pente locale du front d'onde à partir de la position de chaque tache.

Dans le procédé selon l'invention, la variation locale de la structure de la matrice permet de déterminer le décalage éventuel (37) (mesuré en nombre entier de sous-pupilles) entre la sous pupille dont est issue une tache détectée et la sous-pupille qui définit la zone de localisation présumée dans laquelle se trouve cette tache, et d'en déduire de manière certaine cette correspondance au moyen d'une étape 36 de comparaison, dans chacun des deux fichiers (fichier de référence et fichier de mesure) des contributions dues à la variation locale. Ensuite, connaissant cette correspondance, à partir du fichier de référence et du fichier de mesure, on peut alors calculer (étape 38) la pente moyenne du front d'onde sur chaque surface élémentaire interceptée par chaque sous-pupille éclairée par le front d'onde. Lors de ce calcul, on soustrait par exemple les positions des taches enregistrées dans le fichier de référence à celles enregistrées dans le fichier de mesure et correspondant aux taches issues des mêmes sous-pupilles, ce qui permet de s'affranchir, dans l'analyse du front d'onde, des contributions dues à la structure de la matrice. On peut ensuite, à partir des mesures de pente locales, procéder éventuellement à la reconstruction de la phase du front d'onde (étape 39) par des moyens connus ; cette étape permet par exemple de donner les aberrations géométriques classiques du front d'onde incident, et en particulier la mesure du basculement du front d'onde, cette mesure pouvant être donnée de manière exacte grâce à la valeur connue du décalage.

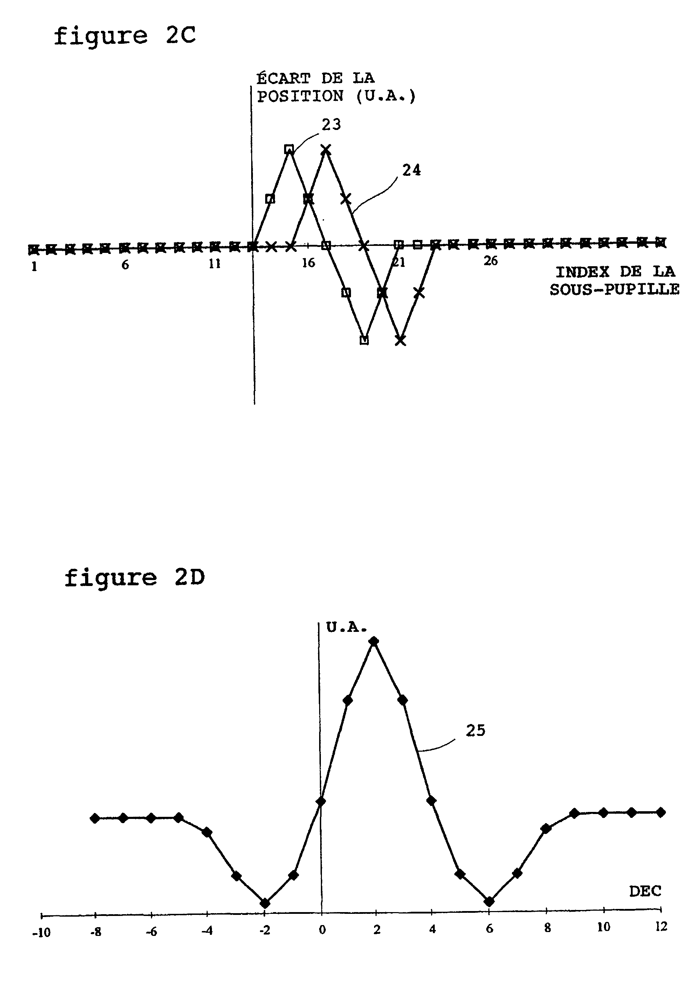

La comparaison 36 des contributions peut se faire par différentes méthodes. Selon une première méthode par exemple, on va chercher à comparer des fichiers entre eux. Il est alors préférable que ces fichiers ne contiennent que les contributions dues aux variations locales, c'est-à-dire des contributions hautes fréquences, comparées aux contributions basses fréquences que sont celles dues au front d'onde que l'on analyse. On peut savoir a priori que le fichier de référence ne contient que les contributions dues aux variations locales; soit parce que le fichier de référence a été établi directement pour ne contenir que ces contributions, soit parce que les contributions dues aux variations lentes, connues, ont été préalablement soustraites. On peut alors appliquer au fichier de mesure (étape 361) un filtre passe haut adapté aux variations locales de telle sorte à ne garder sensiblement que les contributions dues à ces variations et comparer le fichier de mesure après filtrage (362) directement avec le fichier de référence. Sur la figure 3, cette comparaison est notée 363. Cette comparaison permet de déterminer un décalage éventuel (365). Si le fichier de référence contient des contributions basses fréquences, par exemple s'il a été établi au moyen d'un front d'onde connu, non plan, incident sur l'analyseur, on peut appliquer aussi un filtrage passe haut au fichier de référence. Avantageusement, ce filtrage est le même, comme cela est illustré sur la figure 3. La comparaison 363 se fait alors entre les deux fichiers après filtrage, notés 362 et 364 sur la figure 3. Dans l'exemple illustré par les figures 2A à 2D, les fichiers avant comparaison sont illustrés sur la figure 2C. La courbe 23 correspond au fichier de référence; c'est la même que la courbe 21 de la figure 2A car dans cet exemple, le fichier de référence ne comporte que la contribution due à la variation locale. Par contre, la courbe 24 est obtenue après filtrage passe-haut de la courbe 22 de la figure 2B; dans cet exemple simple, le filtrage conduit juste à la suppression de la contribution due à la courbure. La comparaison 363 peut être faite par exemple par une opération de corrélation entre les deux fichiers après filtrage. Le résultat de cette opération est illustré dans l'exemple choisi par la courbe 25 de la figure 2D. Cette courbe donne le résultat de la corrélation en fonction de valeurs de décalage (dec) possibles, le décalage étant donné en nombre de sous-pupilles. Il s'agit donc ici de calculer la fonction :

$$\sum_i \frac{f(i) \times g(i - dec)}{i}$$

où f(i) est par exemple la valeur de l'écart de la position de la tache issue de la sous-pupille $SP_i$ dans le fichier de référence (éventuellement après filtrage) et g(i-dec) est la valeur de l'écart de la position de la tache issue de la sous-pupille $SP_i$ dans le fichier de mesure après filtrage auquel on a appliqué un décalage dec. Dans cet exemple, le pic de corrélation se trouve pour un décalage égal à deux sous-pupilles.

Le filtrage passe-haut 361 appliqué au fichier de mesure et/ou au fichier de référence peut être un filtrage classique sur les fichiers de points en choisissant une fréquence de coupure adaptée à la variation locale de la structure de la matrice; cette fréquence est par exemple égale à l'inverse du pas moyen de la matrice multiplié par un nombre donné N. N est alors choisi suffisamment grand pour que soit gardée la contribution due à la variation locale et suffisamment faible pour que soit supprimée au maximum la contribution due au front d'onde incident. Le filtrage peut consister aussi, dans le cas d'un front d'onde de support donné, par exemple circulaire, et qui se prête bien à une décomposition de la phase du front d'onde sur une base de polynômes connus, à soustraire dans les fichiers les contributions dues à un nombre donné de ces polynômes. Il peut s'agir par exemple des polynômes de Zernike dans le cas classique des fronts d'ondes à support circulaire.

Selon une autre méthode pour la comparaison (36) des contributions dues à la variation locale, il n'est pas nécessaire d'appliquer, à l'un et/ou à l'autre des 2 fichiers un filtrage passe-haut, on peut par exemple dans un premier temps appliquer à l'un des deux fichiers une valeur hypothétique de décalage, par exemple au fichier de mesure 35, puis soustraire au fichier ainsi obtenu le fichier de référence 32. On cherche alors en itérant la valeur du décalage appliqué, pour quelle valeur de décalage la contribution due à la variation locale (haute fréquence) dans le fichier issu de la soustraction est la plus faible.

Bien sûr, d'autres méthodes mathématiques peuvent être utilisées pour comparer dans les deux fichiers les contributions dues à la variation locale de la structure et en déduire le décalage.

On décrit dans la suite un autre exemple de variations locales introduites dans la structure d'une matrice du dispositif selon l'invention pour la mise en oeuvre du procédé selon l'invention. Connaissant la forme générale de la répartition fréquentielle des positions des taches correspondant aux fronts d'onde incidents ou ce qui revient au même, la forme de la répartition fréquentielle des pentes des fronts d'onde, on peut chercher à optimiser les variations locales pour avoir la plus grande probabilité de déterminer le décalage. Cette optimisation est faite en adaptant cette méthode, qui peut s'appliquer par exemple à des fronts d'onde à support circulaire dont on sait que la phase se décompose sur un nombre limité de polynômes de Zernike. On cherche alors des variations locales non périodiques qui engendrent une contribution haute fréquence, dont on peut donner une répartition fréquentielle théorique connaissant la forme générale des contributions des fronts d'ondes qu'on analyse. Pour calculer la structure de la matrice qui correspond à ces variations locales, on peut par exemple effectuer un tirage aléatoire sur l'ensemble des sous-pupilles des positions des taches correspondants à chaque sous-pupille. Dans le domaine fréquentiel, cela se traduit par une répartition constante que l'on multiplie par la répartition théorique des variations locales que l'on recherche. En prenant la transformée de Fourier inverse de cette nouvelle répartition, on obtient de nouvelles valeurs des écarts des taches correspondant aux sous-pupilles. Ces valeurs sont données dans une unité arbitraire qu'il faut alors traduire dans une échelle métrique pour que cela puisse être appliqué en pratique à la fabrication de la matrice.

Dans tout ce qui a été décrit précédemment, on a considéré que la variation locale de la structure consistait en un écart de positionnement de une ou plusieurs microlentilles adjacentes.

On peut aussi considérer une variation de taille de une ou plusieurs microlentilles. Cela se traduit également dans le plan du détecteur par des écarts des positions des taches issues des sous-pupilles correspondantes à ces microlentilles.

Mais d'autres paramètres propres aux microlentilles peuvent être pris pour former la variation locale de la structure.

Ainsi, dans un autre exemple de matrice de microlentilles pour le dispositif selon l'invention, la variation locale de la structure peut être une variation de la transmission de une ou plusieurs microlentilles adjacentes. Dans ce cas, la variation locale ne se traduit pas par des écarts de positions de taches mais par des variations d'intensité lumineuse de ces taches. Cependant, la mise en oeuvre du procédé selon l'invention décrite selon l'exemple précédent peut s'appliquer tout aussi bien. Il faudra seulement dans les fichiers de référence et de mesure associer à chaque sous-pupille, en plus de la position des taches, leurs intensités, et ce sont les contributions dues à la variation locale de la structure de la matrice dans les intensités des taches qu'il faudra comparer (étape 36 sur la figure 3) pour y déterminer le décalage éventuel (37) en nombre de sous-pupilles entre ces contributions.

Bien sur, les différentes natures des variations locales de la structure de la matrice du dispositif selon l'invention peuvent être combinées.

**Revendications**

**1.** Procédé d'analyse d'un front d'onde basé sur la mesure locale de la pente du front d'onde, le procédé comprenant une étape (34) d'acquisition du front d'onde consistant en:

- une étape de détection du front d'onde au moyen notamment d'une matrice (ML) de microlentilles ($L_i$), d'un détecteur (DET) et de moyens de traitement du signal, chaque microlentille ($L_i$) définissant une sous-pupille ($SP_i$), indexée, et focalisant une surface élémentaire du front d'onde, interceptée par ladite sous-pupille, pour former une tache ($T_i$) sur le détecteur délivrant un signal, une zone ($Z_i$) de localisation présumée de la tache sur le détecteur étant définie pour chaque sous-pupille,

- une étape de traitement du signal délivré par le détecteur permettant notamment d'établir un fichier de mesure (35) associant notamment à chaque sous-pupille dans la zone de localisation de laquelle est détectée une tache, la position de cette tache, chaque sous-pupille étant repérée par son index,

le procédé étant **caractérisé en ce que** il comporte en outre:

- • le choix préalable (30) d'une matrice (ML) de microlentilles présentant au moins une variation locale de sa structure,
- • une étape préalable (31) de caractérisation de cette matrice permettant d'établir un fichier de référence (32) associant notamment à chaque sous-pupille, repérée par son index, la position de la tache issue de ladite sous-pupille lorsque la sous-pupille est éclairée par un front d'onde connu, les données du fichier comportant une contribution due à la variation locale de la structure de la matrice,
- • lors de chaque analyse (33) d'un front d'onde,

  - l'établissement du fichier de mesure (35), les données du fichier comportant également une contribution due à la variation locale de la structure de la matrice,
  - la comparaison (36) desdites contributions prises dans chacun des deux fichiers, cette comparaison permettant de déterminer un décalage éventuel (37) en nombre de sous-pupilles entre ces deux contributions et d'en déduire de manière certaine la correspondance entre une tache détectée et la sous-pupille dont elle est issue,
  - le calcul (38), connaissant cette correspondance, à partir du fichier de mesure et du fichier de référence, de la pente moyenne du front d'onde sur chaque surface élémentaire interceptée par chaque sous-pupille éclairée par le front d'onde.

**2.** Procédé selon la revendication 1, caractérisé en que le fichier de référence (32) ne comprend qu'une contribution due à la variation locale et en ce que la contribution due à la variation locale dans le fichier de mesure est obtenue par application audit fichier d'un filtrage passe-haut (361) adapté à ladite variation, le décalage (37) entre les deux contributions étant alors déterminé par comparaison (363) du fichier de référence (32) et du fichier de mesure après filtrage (362).

**3.** Procédé selon la revendication 1, **caractérisé en**

**ce que** les contributions dues à la variation locale dans le fichier de mesure et dans le fichier de référence sont obtenues par application aux deux fichiers d'un même filtrage passe-haut (361), le décalage (37) entre les deux contributions étant déterminé par comparaison (363) des deux fichiers après filtrage (362, 364).

4. Procédé selon l'une des revendications 2 ou 3, **caractérisé en ce que** la phase du front d'onde à analyser pouvant se décomposer sur une base de polynômes connus, le filtrage passe-haut (361) appliqué à un fichier consiste à soustraire à ce fichier les contributions dues à un nombre donné de ces polynômes.

5. Procédé selon l'une des revendications 3 ou 4, **caractérisé en ce que** la comparaison (363) des fichiers après filtrage est faite au moyen d'une opération de corrélation.

6. Procédé selon la revendication 1, **caractérisé en ce que** la comparaison (36) est faite en appliquant à l'un des deux fichiers (32, 35) une valeur hypothétique de décalage, en effectuant une soustraction entre le fichier ainsi obtenu et l'autre fichier, et en itérant la valeur du décalage appliqué de telle sorte à déterminer pour quelle valeur de décalage, la contribution due à la variation locale dans le fichier issu de la soustraction est la plus faible.

7. Procédé selon l'une des revendications précédentes, **caractérisé en ce qu'**il comprend en outre une étape (39) de reconstruction de la phase du front d'onde, permettant notamment de déterminer la valeur exacte du basculement du front d'onde.

8. Dispositif d'analyse d'un front d'onde comprenant notamment une matrice (ML) de microlentilles ($L_i$), un détecteur (DET) et des moyens de traitement du signal, chaque microlentille ($L_i$) définissant une sous-pupille ($SP_i$), indexée, et focalisant une surface élémentaire du front d'onde, interceptée par ladite sous-pupille, pour former une tache ($T_i$) sur le détecteur délivrant un signal, une zone ($Z_i$) de localisation présumée de la tache sur le détecteur étant définie pour chaque sous-pupille, les moyens de traitement permettant de traiter le signal délivré par le détecteur afin notamment d'établir un fichier de mesure (35) associant notamment à chaque sous-pupille dans la zone de localisation de laquelle est détectée une tache, la position de cette tache, chaque sous-pupille étant repérée par son index, le dispositif étant **caractérisé en ce que**:

   • sa matrice (ML) de microlentilles présente au moins une variation locale de sa structure, cette matrice étant préalablement caractérisée afin que soit établi un fichier de référence (32) associant notamment à chaque sous-pupille, repérée par son index, la position de la tache issue de ladite sous-pupille lorsque la sous-pupille est éclairée par un front d'onde connu, les données du fichier comportant une contribution due à la variation locale de la structure de la matrice,

   • le fichier de mesure (35) comporte également une contribution due à la variation locale de la structure de la matrice,

   • les moyens de traitement permettent en outre

      - l'établissement du fichier de mesure (35), les données du fichier comportant également une contribution due à la variation locale de la structure de la matrice,

      - de comparer lesdites contributions prises dans chacun des deux fichiers, cette comparaison permettant de déterminer un décalage éventuel (37) en nombre de sous-pupilles entre ces deux contributions et d'en déduire de manière certaine la correspondance entre une tache détectée et la sous-pupille dont elle est issue,

      - de calculer, connaissant cette correspondance, à partir du fichier de mesure et du fichier de référence, la pente moyenne du front d'onde sur chaque surface élémentaire interceptée par chaque sous-pupille éclairée par le front d'onde.

9. Dispositif selon la revendication 8, **caractérisé en ce qu'**au moins une variation locale de la structure de la matrice est un défaut non contrôlé de la matrice dû à la non reproductibilité du procédé de fabrication de la matrice.

10. Dispositif selon la revendication 8 ou 9, **caractérisé en ce qu'**au moins une variation locale de la structure de la matrice est une variation contrôlée, introduite lors de la fabrication de la matrice.

11. Dispositif selon l'une des revendications 8 à 10, **caractérisé en ce que** la forme générale de la répartition fréquentielle des pentes du front d'onde étant connue, des variations locales sont introduites dans la structure de la matrice de telle sorte que la répartition fréquentielle de la contribution due à ces variations locales soit adaptée à ladite forme générale.

12. Dispositif selon l'une des revendications 8 à 11, **caractérisé en ce qu'**au moins une variation locale de la structure consiste en un écart dans la position d'une ou de quelques microlentilles adjacentes, les contributions prises dans chacun des deux fichiers pour être comparées (36) étant les contributions dues à la variation locale dans les positions des taches.

13. Dispositif selon l'une des revendications 8 à 12, **caractérisé en ce qu'**au moins une variation locale de la structure consiste en une variation de transmission d'une ou de quelques microlentilles adjacentes, les fichiers (32,35) associant en outre à chaque sous-pupille l'intensité de la tache issue de ladite sous-pupille, les contributions prises dans chacun des deux fichiers pour être comparées (36) étant les contributions dues à la variation locale dans les intensités des taches.

## Patentansprüche

1. Verfahren zur Analyse einer Wellenfront, das auf der örtlichen Messung der Neigung der Wellenfront beruht und das einen Schritt (34) der Erfassung der Wellenfront umfaßt, der in folgendem besteht:

   - einem Schritt der Erfassung der Wellenfront insbesondere mit Hilfe einer Matrix (ML) von Mikrolinsen ($L_i$), eines Detektors (DET) und von Mitteln zur Verarbeitung des Signals, wobei jede Mikrolinse ($L_i$) eine indexierte Unterpupille ($SP_i$) bildet und eine von der Unterpupille eingefangene Einzelfläche der Wellenfront fokussiert, um einen Fleck ($T_i$) auf dem Detektor zu bilden, der ein Signal liefert, wobei für jede Unterpupille eine vermutete Zone ($Z_i$) der Lokalisierung des Flecks auf dem Detektor bestimmt wird,
   - einem Schritt der Verarbeitung des von dem Detektor gelieferten Signals, der insbesondere die Erstellung einer Meßdatei (35) gestattet, die insbesondere jeder Unterpupille, in deren Lokalisierungszone ein Fleck erfaßt wird, die Lage dieses Flecks zuordnet, wobei jede Unterpupille durch ihren Index gekennzeichnet ist,

   wobei das Verfahren **dadurch gekennzeichnet ist, daß** es außerdem folgendes umfaßt:

   · die vorhergehende Wahl (30) einer Matrix (ML) von Mikrolinsen, die mindestens eine örtliche Änderung ihrer Struktur aufweist,
   · einen vorhergehenden Schritt (31) der Charakterisierung dieser Matrix, der die Erstellung einer Bezugsdatei (32) gestattet, die insbesondere jeder durch ihren Index gekennzeichneten Unterpupille die Lage des Flecks zuordnet, der von dieser Unterpupille kommt, wenn die Unterpupille durch eine bekannte Wellenfront beleuchtet wird, wobei die Daten der Datei einen Anteil umfassen, der durch die örtliche Änderung der Struktur der Matrix verursacht wird,

   · bei jeder Analyse (33) einer Wellenfront

     - die Erstellung der Meßdatei (35), wobei die Daten der Datei auch einen durch die örtliche Änderung der Struktur der Matrix verursachten Anteil umfaßt,
     - den Vergleich (36) dieser in jeder der beiden Dateien genommenen Anteile, wobei dieser Vergleich gestattet, die eventuelle Versetzung (37) in der Anzahl von Unterpupillen zwischen diesen beiden Anteilen zu bestimmen und daraus auf sichere Weise die Entsprechung zwischen dem erfaßten Fleck und der Unterpupille, von der er kommt, abzuleiten,
     - wenn diese Entsprechung bekannt ist, die Berechnung (38) der mittleren Neigung der Wellenfront auf jeder Einzelfläche, die von jeder durch die Wellenfront beleuchteten Unterpupille eingefangen wird, aus der Meßdatei und aus der Bezugsdatei.

2. Verfahren nach Anspruch 1, **dadurch gekennzeichnet, daß** die Bezugsdatei (32) nur einen durch die örtliche Änderung verursachten Anteil umfaßt und daß der durch die örtliche Änderung verursachte Anteil in der Meßdatei durch Anlegen einer an diese Änderung angepaßten Hochpassfilterung (361) an diese Datei erhalten wird, wobei die Versetzung (37) zwischen den beiden Anteilen nun durch Vergleich (363) der Bezugsdatei (32) und der Meßdatei nach Filterung (362) bestimmt wird.

3. Verfahren nach Anspruch 1, **dadurch gekennzeichnet, daß** die durch die örtliche Änderung verursachten Anteile in der Meßdatei und in der Bezugsdatei durch Anlegen einer gleichen Hochpassfilterung (361) an die beiden Dateien erhalten werden, wobei die Versetzung (37) zwischen den beiden Anteilen durch Vergleich (363) der beiden Dateien nach Filterung (362, 364) bestimmt wird.

4. Verfahren nach einem der Ansprüche 2 oder 3, **dadurch gekennzeichnet, daß** die Phase der zu analysierenden Wellenfront auf einer Basis von bekannten Polynomen zerlegt werden kann und die an eine Datei angelegte Hochpaßfilterung (361) darin besteht, daß von dieser Datei die durch eine bestimmte Anzahl dieser Polynome verursachten Anteile subtrahiert werden.

5. Verfahren nach einem der Ansprüche 3 oder 4, **dadurch gekennzeichnet, daß** der Vergleich (363) der Dateien nach Filterung mit Hilfe einer Korrelationsoperation durchgeführt wird.

6. Verfahren nach Anspruch 1, **dadurch gekennzeichnet, daß** der Vergleich (36) durchgeführt wird, indem an eine der beiden Dateien (32, 35) ein hypothetischer Versetzungswert angelegt wird, indem eine Subtraktion zwischen der auf diese Weise erhaltenen Datei und der anderen Datei durchgeführt wird und indem der Wert der angelegten Versetzung so iteriert wird, daß bestimmt wird, bei welchem Versetzungswert der durch die örtliche Änderung verursachte Anteil in der aus der Subtraktion hervorgehenden Datei der kleinste ist.

7. Verfahren nach einem der vorhergehenden Ansprüche, **dadurch gekennzeichnet, daß** es außerdem einen Schritt (39) der Rekonstruktion der Phase der Wellenfront umfaßt, der inbesondere die Bestimmung des genauen Werts des Kippens der Wellenfront gestattet.

8. Vorrichtung zur Analyse einer Wellenfront, umfassend insbesondere eine Matrix (ML) von Mikrolinsen ($L_i$), einen Detektor (DET) und Mittel zur Verarbeitung des Signals, wobei jede Mikrolinse ($L_i$) eine indexierte Unterpupille ($SP_i$) bildet und eine von dieser Unterlinse eingefangene Einzelfläche der Wellenfront fokussiert, um einen Fleck ($T_i$) auf dem Detektor zu bilden, der ein Signal liefert, wobei eine vermutete Zone ($Z_i$) der Lokalisierung des Flecks auf dem Detektor für jede Unterpupille definiert wird, wobei die Verarbeitungsmittel die Verarbeitung des von dem Detektor gelieferten Signals gestatten, um insbesondere eine Meßdatei (35) zu erstellen, die insbesondere jeder Unterpupille, in deren Lokalisierungszone ein Fleck erfaßt wird, die Lage dieses Flecks zuordnet, wobei jede Unterpupille durch ihren Index gekennzeichnet ist, wobei diese Vorrichtung **dadurch gekennzeichnet ist, daß**

- ihre Matrix (ML) von Mikrolinsen mindestens eine örtliche Änderung ihrer Struktur aufweist, wobei diese Matrix zuvor charakterisiert wird, damit eine Bezugsdatei (32) erstellt wird, die insbesondere jeder durch ihren Index gekennzeichneten Unterpupille die Lage des Flecks zuordnet, der von dieser Unterpupille kommt, wenn die Unterpupille von einer bekannten Wellenfront beleuchtet wird, wobei die Daten der Datei einen durch die örtliche Änderung der Struktur der Matrix verursachten Anteil aufweisen,
- die Meßdatei (35) ebenfalls einen durch die örtliche Änderung der Struktur der Matrix verursachten Anteil aufweist,
- die Verarbeitungsmittel ferner folgendes gestatten:

  - die Erstellung der Meßdatei (35), wobei die Daten der Datei auch einen durch die örtliche Änderung der Struktur der Matrix verursachten Anteil aufweisen,
  - den Vergleich dieser in jeder der beiden Dateien genommenen Anteile, wobei dieser Vergleich gestattet, eine eventuelle Versetzung (37) in der Anzahl von Unterpupillen zwischen diesen beiden Anteilen zu bestimmen und daraus auf sichere Weise die Entsprechung zwischen einem erfaßten Fleck und der Unterpupille, von der er kommt, abzuleiten,
  - wenn man diese Entsprechung kennt, die Berechnung der mittleren Neigung der Wellenfront auf jeder Einzelfläche, die von jeder von der Wellenfront beleuchteten Unterpupille eingefangen wird, aus der Meßdatei und aus der Bezugsdatei.

9. Vorrichtung nach Anspruch 8, **dadurch gekennzeichnet, daß** mindestens eine örtliche Änderung der Struktur der Matrix ein nicht gesteuerter Fehler der Matrix ist, der durch die Nichtreproduzierbarkeit des Verfahrens zur Herstellung der Matrix verursacht wird.

10. Vorrichtung nach Anspruch 8 oder 9, **dadurch gekennzeichnet, daß** mindestens eine örtliche Änderung der Struktur der Matrix eine gesteuerte. Änderung ist, die bei der Herstellung der Matrix eingeführt wurde.

11. Vorrichtung nach einem der Ansprüche 8 bis 10, **dadurch gekennzeichnet, daß** die allgemeine Form der frequenziellen Verteilung der Neigungen der Wellenfront bekannt ist und örtliche Änderungen in der Struktur der Matrix so eingeführt werden, daß die frequenzielle Verteilung des durch diese örtlichen Änderungen verursachten Anteils an diese allgemeine Form angepaßt ist.

12. Vorrichtung nach einem der Ansprüche 8 bis 11, **dadurch gekennzeichnet, daß** mindestens eine örtliche Änderung der Struktur in einer Abweichung in der Stellung einer oder einiger benachbarter Mikrolinsen besteht, wobei die Anteile, die in jeder der beiden Dateien genommen werden, um verglichen zu werden (36), die Anteile sind, die durch die örtliche Änderung in den Lagen der Flecken verursacht werden.

13. Vorrichtung nach einem der Ansprüche 8 bis 12, **dadurch gekennzeichnet, daß** mindestens eine örtliche Änderung der Struktur in einer Änderung der Übertragung einer oder einiger benachbarter Mikrolinsen besteht, wobei die Dateien (32, 35) außerdem jeder Unterpupille die Stärke des von dieser Unterpupille kommenden Flecks zuordnen, wobei die Anteile, die in jeder der beiden Dateien genommen werden, um verglichen zu werden (36), die Anteile sind, die durch die örtliche Änderung in den Stärken der Flecken verursacht werden.

## Claims

1. A method of analysis of a wavefront based on local measurement of the slope of the wavefront, the method comprising a stage (34) of acquisition of the wavefront consisting of :

   - a stage of detection of the wavefront in particular by means of a matrix (ML) of microlenses ($L_i$), a detector (DET) and signal processing means, each microlens ($L_i$) defining a subpupil ($SP_i$), indexed, and focusing an elementary surface of the wavefront, intercepted by the said subpupil, to form a spot ($T_i$) on the detector supplying a signal, a zone ($Z_i$) of assumed localization of the spot on the detector being defined for each subpupil,
   - a stage of processing of the signal supplied by the detector making it possible in particular to establish a measurement file (35) associating in particular to each subpupil in the localization zone of which a spot is detected, the position of this spot, each subpupil being referenced by its index, the method being

   **characterized in that** it includes in addition :

   * prior choice (30) of a matrix (ML) of microlenses exhibiting at least one local variation of its structure,
   * a preliminary stage (31) of characterization of this matrix making it possible to establish a reference file (32) associating in particular to each subpupil, referenced by its index, the position of the spot originating from the said subpupil when the subpupil is illuminated by a know wavefront, the file data including a contribution due to the local variation of the structure of the matrix,
   * during each analysis (33) of a wavefront,

     - establishment of the measurement file (35), the file data also including a contribution due to the local variation of the matrix structure,
     - comparison (36) of the said contributions taken from each of the two files, this comparison making it possible to determine any shift (37) in number of subpupils between these two contributions and deduce therefrom, with certainty, the correspondence between a detected spot and the subpupil from which it originated,
     - knowing this correspondence, on the basis of the measurement file and the reference file, calculation (38) of the average slope of the wavefront on each elementary surface intercepted by each subpupil illuminated by the wavefront.

2. A method according to claim 1, **characterized in that** the reference file (32) only includes a contribution due to the local variation and **in that** the contribution due to the local variation in the measurement file is obtained by application, to the said file, of high-pass filtering (361) adapted to the said variation, the shift (37) between the two contributions then being determined by comparison (363) of the reference file (32) and of the measurement file after filtering (362).

3. A method according to claim 1, **characterized in that** the contributions due to the local variation in the measurement file and in the reference file are obtained by application, to the two files, of the same high-pass filtering (361), the shift (37) between the two contributions being determined by comparison (363) of the two files after filtering (362, 364).

4. A method according to one of the claims 2 or 3, **characterized in that** the phase of the wavefront to be analysed being resolvable on a base of known polynomials, the high-pass filtering (361) applied to a file consists of subtracting, from this file, the contributions due to a given number of these polynomials .

5. A method according to one of the claims 3 or 4, **characterized in that** the comparison (363) of the files after filtering is carried out by means of a correlation operation.

6. A method according to claim 1, **characterized in that** the comparison (36) is carried out by applying, to one of the two files (32, 35), a hypothetical shift value by effecting a subtraction between the file thus obtained and the other file, and iterating the shift value applied so as to determine for what shift value, the contribution due to the local variation in the file resulting from the subtraction is the smallest.

7. A method according to one of the preceding claims, **characterized in that** it comprises in addition a stage (39) of reconstruction of the phase of the wavefront, making it possible in particular to determine the exact value of the swing of the wavefront.

8. A device for wavefront analysis comprising in particular a matrix (ML) of microlenses ($L_i$), a detector (DET) and signal processing means, each microlens ($L_i$) defining a subpupil ($SP_i$), indexed, and focusing an elementary surface of the wavefront, intercepted by the said subpupil, to from a spot ($T_i$) on the detector supplying a signal, a zone ($Z_i$) of assumed localization of the spot on the detector being defined for each subpupil, the processing means making it possible to process the signal supplied by the detector in order in particular to establish a measurement file (35) associating in particular, with each subpupil in the localization zone from which a spot is detected, the position of this spot, each subpupil being referenced by its index, the device being **characterized in that** :

* its matrix (ML) of microlenses has at least one local variation of its structure, this matrix being characterized beforehand so as to establish a reference file (32) associating in particular, with each subpupil, referenced by its index, the position of the spot originating from the said subpupil when the subpupil is illuminated by a know wavefront, the file data including a contribution due to the local variation of the structure of the matrix,
* the measurement file (35) also includes a contribution due to the local variation of the structure of the matrix,
* the processing means permit in addition

  - establishment of the measurement file (35), the file data also including a contribution due to the local variation of the structure of the matrix,
  - comparing the said contributions taken from each of the two files, this comparison making it possible to determine any shift (37) in number of subpupils between these two contributions and deduce therefrom, with certainty, the correspondence between a detected spot and the subpupil from which it originated,
  - knowing this correspondence, on the basis of the measurement file and of the reference file, calculation of the average slope of the wavefront on each elementary surface intercepted by each subpupil illuminated by the wavefront.

9. A device according to claim 8, **characterized in that** at least one local variation of the structure of the matrix is an uncontrolled defect of the matrix due to the non-reproducibility of the method of manufacture of the matrix.

10. A device according to claims 8 or 9, **characterized in that** at least one local variation of the structure of the matrix is a controlled variation, introduced during manufacture of the matrix.

11. A device according to one of the claims 8 to 10, **characterized in that** the general form of the frequency distribution of the slopes of the wavefront being know, local variations are introduced into the structure of the matrix in such a way that the frequency distribution of the contribution due to these local variations is adapted to the said general form.

12. A device according to one of the claims 8 to 11, **characterized in that** at least one local variation of the structure consists of a difference in the position of one or more adjacent microlenses, the contributions taken from each of the two files to be compared (36) being the contributions due to the local variation in the positions of the spots.

13. A device according to one of the claims 8 to 12, **characterized in that** at least one local variation of the structure consists of a variation in transmission of one or more adjacent microlenses, the files (32, 35) in addition associating with each subpupil, the intensity of the spot originating from the said subpupil, the contributions taken from each of the two files to be compared (36) being the contributions due to the local variation in the intensities of the spots.

figure 1

figure 2A

ÉCART DE LA
POSITION (U.A.)

INDEX DE LA
SOUS-PUPILLE

figure 2B

ÉCART DE LA
POSITION (U.A.)

INDEX DE LA
SOUS-PUPILLE

figure 2C

ÉCART DE LA
POSITION (U.A.)

23

24

1    6    11    16    21    26

INDEX DE LA
SOUS-PUPILLE

figure 2D

U.A.

25

DEC

-10   -8   -6   -4   -2   0   2   4   6   8   10   12

figure 3